# EUROPEAN PATENT APPLICATION

(11) **EP 4 811 631 A1**
(43) Date of publication of application: **23.09.2026**
(21) Application number: 25165383.8
(22) Date of filing: 21.03.2025
(51) Int. Cl.: H02M 1/00, H02M 3/00, H02M 3/335, H02M 7/483

(54) **AUXILIARY POWER SUPPLY FOR MODULAR MULTILEVEL CONVERTER AND MODULAR MULTILEVEL CONVERTER COMPRISING SAID AUXILIARY POWER SUPPLY**

(71) Applicant: GE Energy Power Conversion Technology Limited, Rugby, Warwickshire CV21 1BD (GB)
(72) Inventor: HADJI, Abderrezak, 91140 VILLEBON SUR YVETTE (FR); PERMUY, Alfred, 91140 VILLEBON-SUR-YVETTE (FR)
(74) Representative: Casalonga

(57) **Abstract**

Auxiliary power supply, connected by its inputs to a power supply and by its outputs to a load, comprising at least two modules (Mi,Mj), the modules inputs being connected in serial, the modules outputs being connected in parallel, wherein in each module:
a. The first input pole (Ii1,Ij1) is connected to a first pole of a first capacitor (Ci1,Cj1) and to a first pole of a first switch (Si1,Sj1),
b. The second input pole (Ii2,Ij2) is connected to the second pole of the first capacitor (Ci1,Cj1), to a second pole of a second switch (Si2,Sj2) and to a pole of a second capacitor (Ci2,Cj2),
c. a second pole of the first switch (Si1,Sj 1) is connected to a first pole of the second switch (Si2,Sj2) and to a pole of an inductor (Li,Lj ),
d. the inductor (Li,Lj) is connected by its other pole to a first end of a primary winding of a transformer (Ti,Tj),
e. the second end of the transformer (Ti,Tj) primary winding is connected to a first pole of the second capacitor (Ci2,Cj2),
the transformer (Ti,Tj) secondary winding is connected to the output poles (Oi1,Oi2,Oj1,Oj2)

## Description

The invention relates to the field of power converters, in particular, the field of Modular Multilevel Converters.

### BACKGROUND

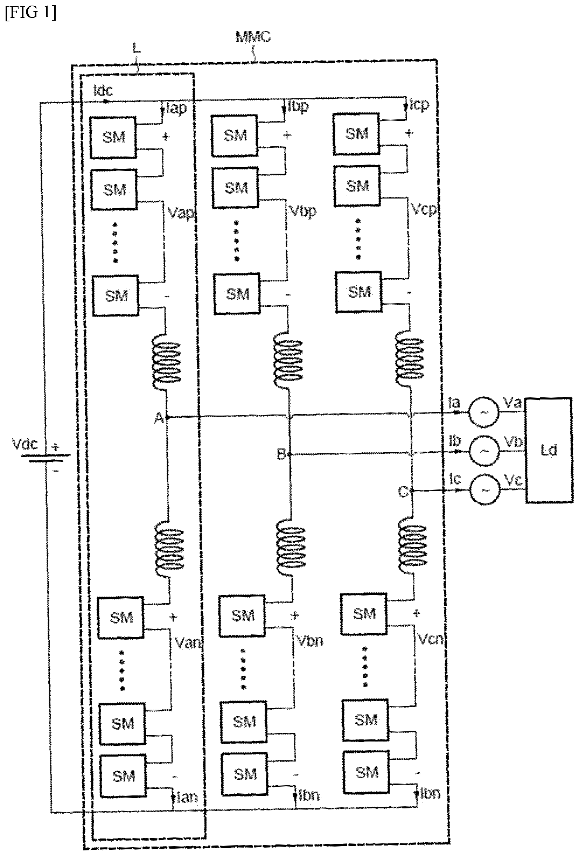

A Modular Multilevel Converter MMC is illustrated by figure FIG. 1 and generally comprises at least two legs L, each leg L being connected to a common input power and to a phase for powering a load Ld. Each leg L comprising at last two controllable switches, each in a submodule SM and controlled thanks to a control signal. Each submodule SM comprises a capacitor connected in series with the controllable switch.

Input current Idc is hashed into currents Ia,Ib,Ic supplied as three phases to a load Ld. The supplied currents Ia,Ib,Ic equals to the difference between an input current Iap,Ibp,Icp and an output current Ian,Ibn,Icn in generated by each leg L. Each supplied currents Ia,Ib,Ic is linked to a supplied voltage Va,Vb,Vc. Similarly, input current Iap,Ibp,Icp is linked to an input voltage Vap,Vbp,Vcp and each output current Ian,Ibn,Icn is linked to an output voltage Van,Vbn,Vcn.

The MMC illustrated by FIG. 1 is used for DC-AC power conversion. However, the structure of the MMC stays constant independently from its use.

The controllable switches are generally transistors. In order to control the different switches in each submodule SM, a gate signal has to be generated by a control device. Voltage and/or current measurements along with a control logic also have to be performed. However, those functions require power which has to be supplied by a power supply, named Auxiliary Power Supply, by contrast to the main power supply whose power is converted by the MMC.

Different examples of Auxiliary Power Supplies will now be described.

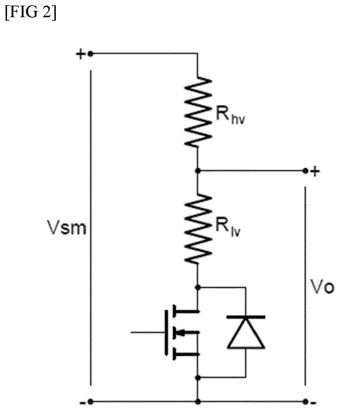

A first auxiliary power supply can be achieved with a simple voltage divider as illustrated by FIG. 2.

In the power supply, the input voltage Vsm is lowered based on the ratio between the two resistors Rhv and Rlv. The transistor is used to modulate the output voltage Vo.

This kind of power supply presents a low input voltage and a low output power. Other drawbacks are a very low efficiency and a high price due to the need of a power switch rated for high voltage.

Another auxiliary power supply can be achieved by a snubber-based Power Tapping topology as described in the document A. Kadavelugu and S. Bhattacharya, "Design considerations and development of gate driver for 15 kV SiC IGBT," in Proc. IEEE Appl. Power Electron. Conf. Expo., Mar. 2014, pp. 1494-1501.

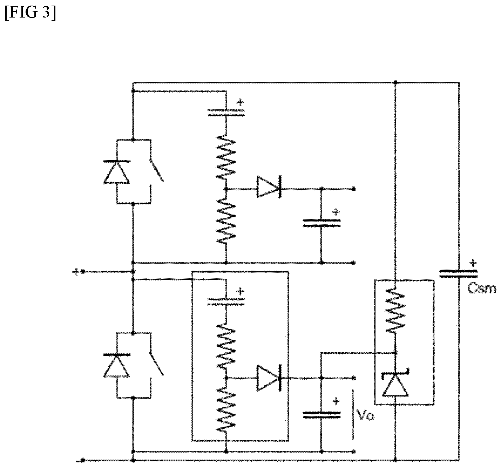

FIG. 3 illustrates this kind of auxiliary power supply. Such an auxiliary power supply depends on the MMC Sub-module power switches and still requires power for powering the first switch. Another drawback resides in its bad reliability.

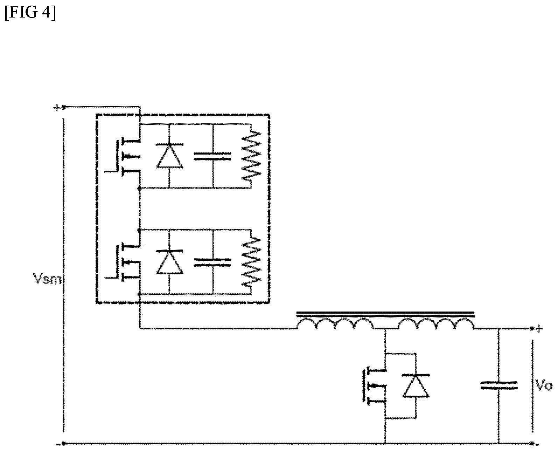

An auxiliary power supply can also be achieved through a Tappered Inductor Buck converter topology as shown in document "T. Modeer, S. Norrga, and H.-P. Nee, "High-voltage tapped-inductor buck converter utilizing an autonomous high-side switch," IEEE Trans. Ind. Electron., vol. 62, no. 5, pp. 2868-2878, May 2015". It is illustrated by FIG. 4.

The features of those APS are a reduced duty cycle, and high reliability. Compared to the other APS described above, those APS enables zero voltage switching ZVS.

It then becomes apparent that the power supplies currently available and suited for supplying power to a MMC submodule control device are cumbersome, costly and somehow limited in the power they can provide.

There is a technical problem consisting in supplying power to at least one power submodule of a MMC that is reduced in cost and size compared to the previous art while allowing higher power throughput.

In particular, there is a need for a device for supplying power to at least one power submodule of a MMC that relies on a lower voltage than the prior art ones.

### SUMMARY OF THE EMBODIMENTS

An object of the invention is an auxiliary power supply, connected by its inputs to a power supply by its outputs to a load, comprising at least two modules, each module comprising a first input pole, a second input pole, a first output pole and a second output pole, the first module being connected by its first input pole to a first pole of the power supply, the last module being connected by its second input pole to a second pole of the power supply, each module but the last being connected to the next module so that the second input pole of a module is connected to the first input pole of the next module, the first output pole of each module being connected together, the second output pole of each module being connected together, wherein in each module:
a. the first input pole is connected to a first pole of a first capacitor and to a first pole of a first switch
b. the second input pole is connected to the second pole of the first capacitor, to a second pole of a second switch and to a pole of a second capacitor,
c. a second pole of the first switch is connected to a first pole of the second switch and to a pole of an inductor
d. the inductor is connected by its other pole to a first end of a primary winding of a transformer,
e. the second end of the transformer primary winding is connected to a first pole of the second capacitor,
f. the transformer secondary winding is connected to the output poles.

Each switch can comprise a power transistor with a freewheeling diode connected to the source and drain of the transistor, the first pole of each switch being connected to the transistor emitter and to the diode cathode, the second pole of each switch being connected to the transistor collector and the diode anode.

A module can comprise a third capacitor connected by a pole to the first pole of the first switch and by another pole to the primary winding and the second capacitor.

The auxiliary power supply can comprise three resistors, a first pole of a first resistor being connected to a first pole of the power supply, a second pole of the first resistor being connected to a first pole of a second resistor, a second pole of the second resistor being connected of a second pole of the power supply, a first pole of a third resistor being connected to either the first output poles or to the second output poles of the modules, the second pole of the resistor being connected in between the first and second resistors.

The power supply can comprise a capacitor of a modular multilevel converter submodule.

The power supply can comprise an external power supply.

At least two primary windings can be coupled to a single secondary winding.

Another object of the invention is a modular multilevel converter comprising at least two legs, each leg comprising at least one submodule, each submodule comprising at least a controllable switch, the modular multilevel converter being fitted with at least one auxiliary power supply as described above, wherein the auxiliary power supply supplies power for at least a submodule.

The modular multilevel converter can comprise one auxiliary power supply for each submodule.

### BRIEF DESCRIPTION OF THE DRAWINGS

The present invention will be better understood from studying the detailed description of a number of embodiments considered by way of entirely non-limiting examples and illustrated by the attached drawing in which:
- FIG. 1 illustrates a modular multilevel converter,
- FIG. 2 to 4 illustrates different layouts for an auxiliary power supply in the prior art,
- FIG. 5 illustrates a first embodiment of an auxiliary power supply according to the present invention,
- FIG. 6 illustrates a second embodiment of an auxiliary power supply according to the present invention,
- FIG. 7 illustrates a third embodiment of an auxiliary power supply according to the present invention,
- FIG. 8 illustrates a fourth embodiment of an auxiliary power supply according to the present invention, and
- FIG. 9 illustrates an alternative to the first embodiment of an auxiliary power supply according to the present invention.

### DETAILED DESCRIPTION

The proposed auxiliary power supply APS adopts a modular structure based on at least two modules wherein the module inputs are connected in series and their outputs in parallel. The voltage stress on the primary switches of each module is reduced to a reasonable level, effect that can be increased by adding more modules in series.

In other words, for an auxiliary power supply comprising N modules, the primary voltage is one-Nth of the input voltage. In addition, due to this modular structure, the current rating of the power switches is also decreased by the same factor.

The control strategy uses Frequency modulation control to regulate the output current or voltage. When the APS is current regulated, Zero Current Switching ZCS is achieved. When the APS is voltage regulated, Zero Voltage Switching ZVS is achieved.

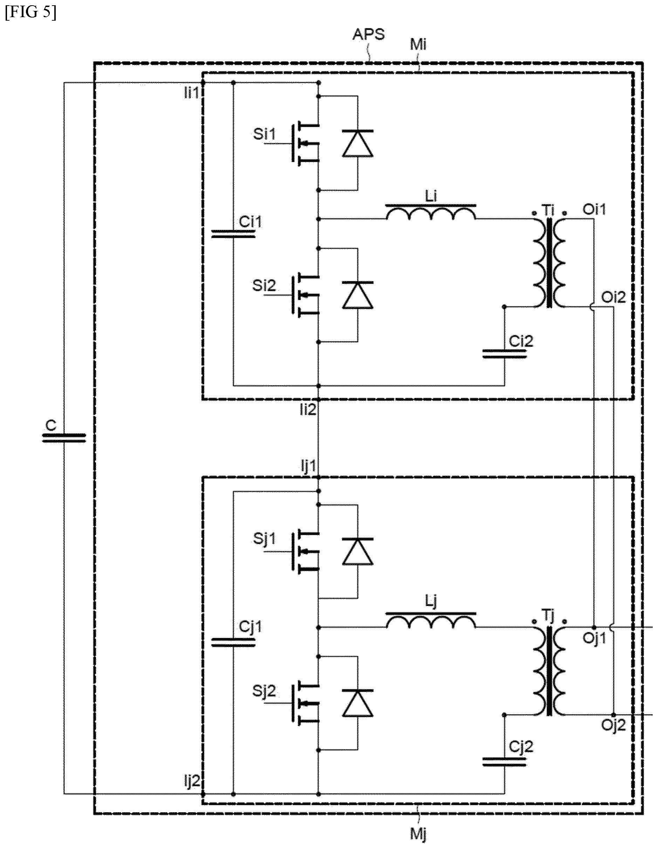

FIG. 5 illustrates a first embodiment of the local APS according to the present invention.

The APS comprises at least two modules referenced Mi and Mj, connected in series to the APS inputs. The APS inputs are connected to an input power supply. Each APS module Mi,Mj is connected in parallel to the APS outputs.

More precisely, the first module Mi comprises two input poles Ii1,Ii2 and two output poles Oi1,Oi2 Similarly, the second module Mj comprises two input poles Ij1,Ij2 and two output poles Oj1,Oj2.

The power supply is connected by a first pole to the first input Ii1 of the first module Mi and by its second pole to the second input Ij2 of the second module Mj.

The second input Ii2 of the first module Mi and the first input Ij1 of the second module Mj are connected together, resulting the modules Mi,Mj being connected in series input-side.

The first output Oi1 of the first module Mi and the first output Oj1 of the second module Mj are connected together and to a first output of the APS. The second output Oi2 of the first module Mi and the second output Oj2 of the second module Mj are connected together and to a second output of the APS. It results from this topology that the modules Mi,Mj are connected in parallel output-side.

Each APS module Mi,Mj comprises the same layout. The layout of module Mi will now be described.

First input pole Ii1 of the first module Mi is connected to a first pole of a first capacitor Ci1 and to a first pole of a first switch Si1.

Second input pole Ii2 of the first module Mi is connected to a second pole of a first capacitor Ci1, to a second pole of a second switch Si2 and to a second pole of a second capacitor Ci2.

A second pole of the first switch Si1 is connected to a first pole of the second switch Si2 and to a first pole of an inductor Li.

The second pole of the inductor Li is connected to a first end of a primary winding of a transformer Ti.

The second end of first transformer primary winding is connected to a first pole of the second capacitor Ci2. The ends of the transformer secondary winding are connected to the output poles Oi1,Oi2.

First and second switch Si1,Si2 comprise a power transistor (a MOSFT on FIG. 5) with a freewheeling diode connected to the source and drain of the transistor.

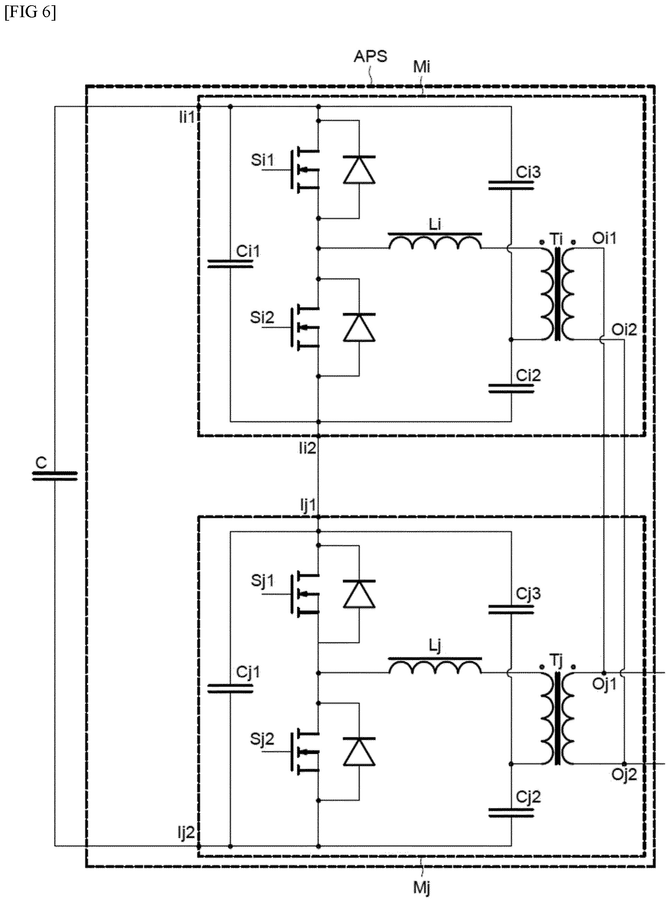

In another embodiment illustrated by FIG. 6, the APM comprises a layout essentially similar to the layout illustrated by FIG. 5. This second embodiment differs from the first embodiment by the presence of a third capacitor Ci3 connected between the first pole of the first power switch Si1 and the connection between the first pole of the second capacitor Ci2 and an end of the primary winding of the transformer Ti.

Such an arrangement enables the use of capacitors of lower value, effectively spreading the value of the second capacitor Ci2 in the first embodiment, between the second capacitor Ci2 and third capacitor Ci3 of this embodiment.

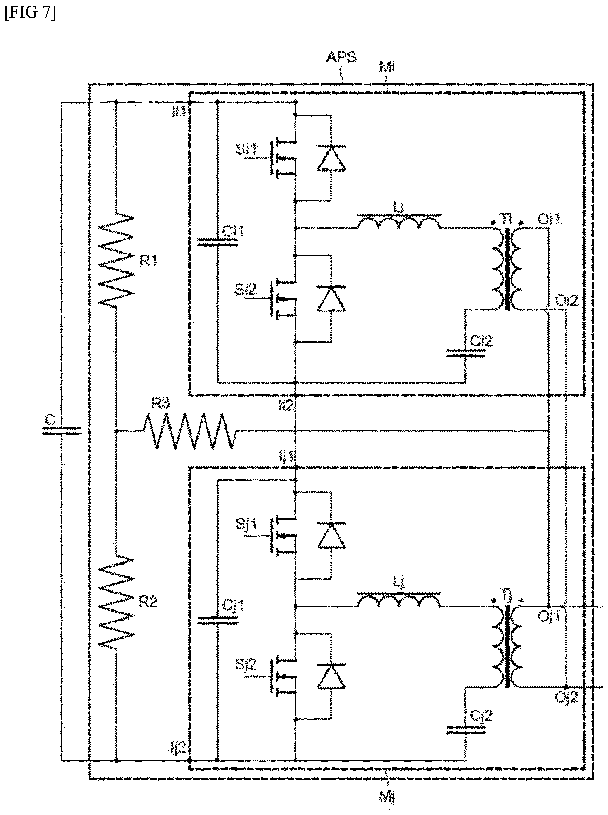

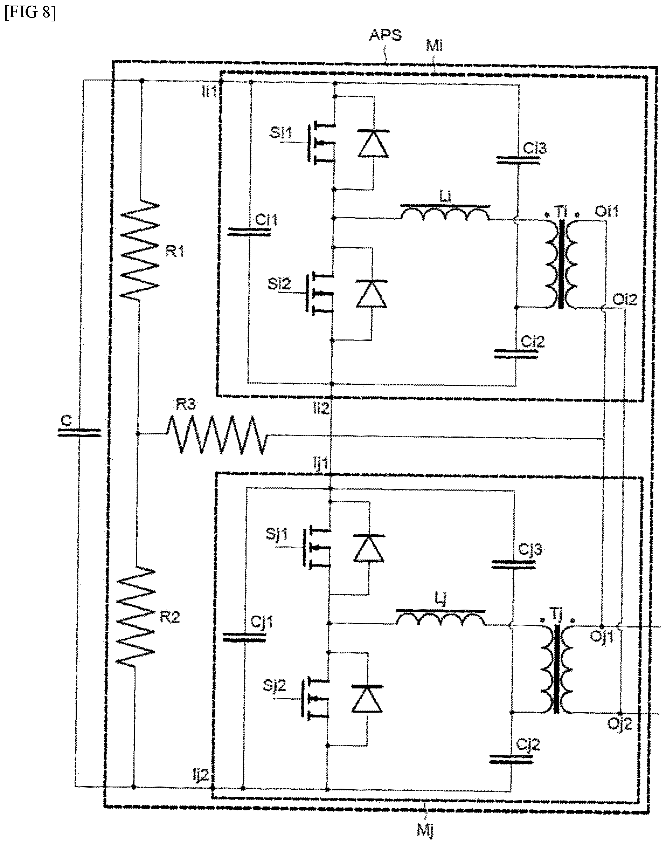

In yet other embodiments illustrated by FIGs. 7 and 8, a bridge of resistors (R1, R2, R3) is connected in parallel to the power supply and to one of the outputs of the APS. Such a bridge enables neutral point clamping between the inputs and outputs of the APS.

FIG. 7 illustrates a third embodiment corresponding to the first embodiment illustrated by FIG. 5. FIG. 8 illustrates a fourth embodiment corresponding to the second embodiment illustrated by FIG. 6.

In both those embodiments, a first resistor R1 is connected to the first input of the APS (in FIGs. 7 and 8, the first input of the APS is the first input Ii1 of the first module Mi), a second resistor R2 is connected to the second input of the APS (in FIGs. 7 and 8, the second input of the APS is the second input Ij2 of the second module Mj), the first resistor R1 and the second resistor R2 being connected in series.

A third resistor R3 is connected to both the first resistor R1 and the second resistor R2 on one hand and to the one set of module output Oi1,Oj1,Oj1,Oj2. On FIGs. 7 and 8, the third resistor R3 is connected to the second outputs Oi2,Oj2. In other embodiments, the third resistor R3 could have been connected to the first outputs Oi1,Oj1.

It is reminded that the module outputs are connected in parallel together and to the APS outputs. Thereby, connecting to one module output equals connecting to the APS output.

In some particular embodiments, the input power supply is a capacitor C comprised in a MMC converter submodule.

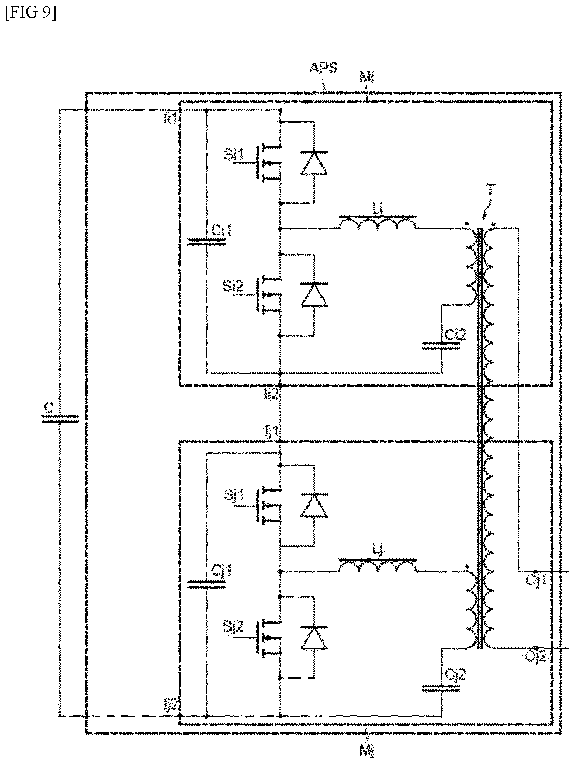

In other embodiments, the transformers Ti,Tj can be replaced by a single transformer comprising multiple primary windings, one secondary winding and one core. In such an embodiment, each primary winding is connected by one end to the second pole of the inductor Li and by another end to a first pole of the second capacitor Ci2. FIG 9 illustrates the first embodiment illustrated by FIG 5, wherein the transformers Ti,Tj are replaced by a single transformer T comprising a primary winding per module Mi,Mj coupled to a single secondary winding connected to the outputs of the APS.

A similar modification, wherein the transformers Ti,Tj are replaced by a single transformer comprising a primary winding per module Mi,Mj coupled to a single secondary winding, can be performed on the other embodiments illustrated by FIGs. 6 to 8.

The different embodiments of an auxiliary power supply described above comprise a serial arrangement of resonant converters, whose inputs are connected in series, the outputs being connected in parallel. Thanks to this layout, the voltage and current rating of each power switches can be reduced compared to those of a power switch regulating a power supply as illustrated in the prior art.

Furthermore, the number of APS modules can be increased to either increase the input voltage or to further reduce the stress on each power switch, and consequently, the voltage and current ratings of each power switch.

The auxiliary power supply can be used either as a voltage source or as a current source and can be adapted to different MV voltage levels, which is particularly important for power conversion applications.

In some embodiments, the APS is used to supply power for at least a submodule of a MMC. The power supplied can be used to power all local functions related to the at least one MMC submodule like gate driver, voltage and current measurement, control board, optical transceivers, ...

## Claims

1. Auxiliary power supply, connected by its inputs to a power supply and by its outputs to a load, comprising at least two modules (Mi,Mj), each module (Mi,Mj) comprising a first input pole (Ii1,Ij1), a second input pole (Ii2,Ij2), a first output pole (Oi1,Oj1) and a second output pole (Oi2,Oj2), the first module being connected by its first input pole to a first pole of the power supply, the last module being connected by its second input pole to a second pole of the power supply, each module but the last being connected to the next module so that the second input pole of a module is connected to the first input pole of the next module, the first output pole of each module being connected together, the second output pole of each module being connected together, wherein in each module:
a. The first input pole (Ii1,Ij1) is connected to a first pole of a first capacitor (Ci1,Cj1) and to a first pole of a first switch (Si1,Sj1),
b. The second input pole (Ii2,Ij2) is connected to the second pole of the first capacitor (Ci1,Cj1), to a second pole of a second switch (Si2,Sj2) and to a pole of a second capacitor (Ci2,Cj2),
c. a second pole of the first switch (Si1,Sj1) is connected to a first pole of the second switch (Si2,Sj2) and to a pole of an inductor (Li,Lj),
d. the inductor (Li,Lj) is connected by its other pole to a first end of a primary winding of a transformer (Ti,Tj),
e. the second end of the transformer (Ti,Tj) primary winding is connected to a first pole of the second capacitor (Ci2,Cj2),
f. the transformer (Ti,Tj) secondary winding is connected to the output poles (Oi1,Oi2,Oj1,Oj2).

2. Auxiliary power supply according to claim 1, wherein each switch (Si1,Si2,Sj1,Sj2) comprises a power transistor with a freewheeling diode connected to the source and drain of the transistor, the first pole of each switch being connected to the transistor emitter and to the diode cathode, the second pole of each switch being connected to the transistor collector and the diode anode.

3. Auxiliary power supply according to either claim 1 or 2, wherein a module (Mi,Mj) comprises a third capacitor connected by a pole to the first pole of the first switch (Si1) and by another pole to the primary winding and the second capacitor (Ci2).

4. Auxiliary power supply according to any of claims 1 to 3, comprising three resistors (R1,R2,R3), a first pole of a first resistor (R1) being connected to a first pole of the power supply, a second pole of the first resistor (R1) being connected to a first pole of a second resistor (R2), a second pole of the second resistor (R2) being connected of a second pole of the power supply, a first pole of a third resistor (R3) being connected to either the first output poles (Oi1, Oj1) or to the second output poles (Oi2, Oj2) of the modules (Mi,Mj), the second pole of the resistor (R3) being connected in between the first and second resistors (R1,R2).

5. Auxiliary power supply according to any of claims 1 to 4, wherein the power supply comprises a capacitor of a modular multilevel converter submodule.

6. Auxiliary power supply according to any of claims 1 to 5, wherein the power supply comprises an external power supply.

7. Auxiliary power supply according to any of claims 1 to 6, wherein at least two primary windings are coupled to a single secondary winding.

8. Modular multilevel converter comprising at least two legs, each leg comprising at least one submodule, each submodule comprising at least a controllable switch, the modular multilevel converter being fitted with at least one auxiliary power supply according to any of claims 1 to 7, wherein the auxiliary power supply supplies power for at least a submodule.

9. Modular multilevel converter according to claim 8, comprising one auxiliary power supply for each submodule.
